Europäisches Patentamt

European Patent Office

Office européen des brevets

(19)

(11) **EP 0 713 904 B1**

(12) **FASCICULE DE BREVET EUROPEEN**

(45) Date de publication et mention
de la délivrance du brevet:
**26.07.2000 Bulletin 2000/30**

(51) Int Cl.⁷: **C09C 1/36**, C09C 3/06,
D21H 17/67, D21H 19/38

(21) Numéro de dépôt: **95402517.7**

(22) Date de dépôt: **10.11.1995**

(54) **Procédé de traitement de pigments de dioxyde de titane, nouveau pigment de dioxyde de titane et son utilisation dans la fabrication du papier**

Verfahren zum Behandeln von Titandioxidpigmenten, Titandioxidpigment und ihre Verwendung in der Papierherstellung

Process for treating titanium dioxide pigments, titanium dioxide pigment and its use in papermaking

(84) Etats contractants désignés:
**AT BE CH DE DK ES FR GB IE IT LI NL PT SE**

(30) Priorité: **23.11.1994 FR 9414017**

(43) Date de publication de la demande:
**29.05.1996 Bulletin 1996/22**

(73) Titulaire: **MILLENNIUM INORGANIC CHEMICALS SA**
**68800 Thann (FR)**

(72) Inventeurs:
• **Guez, Anny**
**F-75017 Paris (FR)**
• **Lorang, Rémy**
**F-68700 Cernay (FR)**

(74) Mandataire: **Barbin le Bourhis, Joel et al**
**Cabinet Bonnet-Thirion,**
**12, Avenue de la Grande-Armée**
**75017 Paris (FR)**

(56) Documents cités:
BE-A- 684 413     FR-A- 1 392 413
FR-A- 2 206 363     FR-A- 2 238 745

• **DATABASE WPI Week 8714 Derwent Publications Ltd., London, GB; AN 87-099162 & JP-A-62 048 775 (ISHIHARA SANGYO KAISHA)**

Remarques:
Le dossier contient des informations techniques présentées postérieurement au dépôt de la demande et ne figurant pas dans le présent fascicule.

**Description**

La présente invention concerne un procédé de traitement de surface d'un pigment de dioxyde de titane, un nouveau pigment de dioxyde de titane et l'utilisation de ce nouveau pigment et de ceux obtenus par le procédé précité dans la fabrication du papier.

On sait que le dioxyde de titane, notamment sous sa forme rutile, peut être utilisé de façon avantageuse comme pigment opacifiant dans la fabrication du papier. En effet, le dioxyde de titane est un pigment blanc qui possède un indice de réfraction élevé; c'est un des composés qui pour une taille de particules optimum (en général 0,2 à 0,3 $\mu$m), diffuse le mieux la lumière.

L'incorporation du dioxyde de titane dans le papier consiste habituellement à mélanger le dioxyde de titane avec les fibres de cellulose prédispersées dans l'eau. Une fixation plus ou moins efficace par attraction électrostatique entre la fibre de cellulose et les particules de dioxyde de titane peut alors avoir lieu. La fibre de cellulose est par nature chargée négativement.

L'opacité du papier pigmenté de dioxyde de titane dépend notamment de la teneur en dioxyde de titane du papier ; elle est donc fonction du taux de fixation sur les fibres de cellulose et de la rétention physico-chimique du dioxyde de titane.

Les dioxydes de titane actuellement utilisés comme pigments opacifiants présentent une rétention physico-chimique qui peut paraître insuffisante. La rétention physico-chimique quantifie l'aptitude du dioxyde de titane à être retenu sur les fibres de cellulose du papier ; le taux de rétention est défini, dans cette application, comme le rapport de la quantité de dioxyde de titane effectivement fixé sur les fibres de cellulose à la quantité totale de dioxyde de titane utilisé lors de l'incorporation. Cette faiblesse dans la rétention physico-chimique nuit à l'économie du procédé, pose des problème de pollution et de recyclage des effluents, et diminue les propriétés finales d'opacité du papier ou du lamifié.

D'autre part, la capacité de rétention physico-chimique des pigments de dioxyde de titane évolue en fonction de la dureté de l'eau utilisée pour la fabrication du papier. Ainsi, un pigment présentant une rétention physico-chimique à un niveau satisfaisant pour une eau douce, ne possédera pas nécessairement cette même propriété pour une eau dure.

Un premier objet de la présente invention est donc de proposer un procédé de traitement de surface d'un pigment de dioxyde de titane qui conduit à des produits présentant une bonne rétention physico-chimique sur les fibres de cellulose.

Un second objet de l'invention est de proposer un pigment de dioxyde de titane présentant aussi une rétention physico-chimique élevée.

Dans ce but, l'invention concerne tout d'abord un procédé de traitement de surface d'un pigment de dioxyde de titane caractérisé en ce qu'il comprend les étapes suivantes:

- on forme une suspension aqueuse de pigments de dioxyde de titane,
- on précipite dans une première étape une couche de phosphate d'alumine à la surface du pigment,
- on précipite dans une deuxième étape une couche d'alumine sur le pigment,
- on récupère le pigment à partir de la suspension.

L'invention concerne aussi un pigment de dioxyde de titane comprenant un noyau de dioxyde de titane recouvert successivement d'une couche de phosphate d'alumine, puis d'une couche d'alumine, puis d'une couche d'oxyde de magnésium.

L'invention concerne ensuite un procédé de traitement de surface d'un pigment de dioxyde de titane caractérisé en ce qu'on met en oeuvre le procédé précédent et en ce qu'après la deuxième étape de précipitation de la couche d'alumine, on précipite une couche d'oxyde de magnésium sur le pigment.

Enfin l'invention concerne l'utilisation dans la fabrication du papier ou de lamifié de papier du pigment précédent ou de ceux obtenus par les procédés décrits ci-dessus.

Le pigment tel que défini plus haut ou obtenu par l'un des procédés décrits ci-dessus présente une rétention physico-chimique élevée. Généralement, un tel pigment permet de conserver une bonne opacité du papier. En outre, il présente habituellement un bonne tenue à la lumière.

L'invention concerne en premier lieu un procédé de traitement de surface d'un pigment de dioxyde de titane caractérisé en ce qu'il comprend les étapes suivantes:

- on forme une suspension aqueuse de pigments de dioxyde de titane,
- on précipite dans une première étape une couche de phosphate d'alumine à la surface du pigment,
- on précipite dans une deuxième étape une couche d'alumine sur le pigment,
- on récupère le pigment à partir de la suspension.

Le traitement consiste donc à réaliser une première couche de phosphate d'alumine directement à la surface du pigment, puis à réaliser une seconde couche, cette fois d'alumine, par dessus la première couche de phosphate d'alumine.

On part d'une suspension aqueuse de pigments de dioxyde de titane comprenant du dioxyde de titane majoritairement sous forme rutile. Elle est formée par tout moyen connu de l'homme du métier tel que par exemple par les procédés sulfate ou chlore.

La concentration des pigments de dioxyde de titane dans cette suspension varie habituellement entre 100 et 500 g/l.

Cette dispersion peut contenir éventuellement un dispersant afin de la disperser et stabiliser. Elle peut en particulier être obtenue par broyage d'une dispersion de dioxyde de titane à l'aide dudit dispersant. On peut choisir le dispersant parmi les produits suivants : l'amino 2-méthyl 2-propanol 1, le tétrapyrophosphate de potassium ou de sodium, l'hexamétaphosphate de potassium ou de sodium ou des sels alcalins de polymère ou de copolymère d'acide polyacrylique tels que les sels d'ammonium ou de sodium d'acide polyacrylique. Dans le cas où des composés à base de phosphate sont utilisés, ceux-ci sont présents généralement dans une concentration de l'ordre de 0,1 à 0,5% en poids exprimé en $P_2O_5$ par rapport au poids du dioxyde de titane.

Le procédé de traitement de surface est généralement effectué à une température supérieure à 60°C. Cette température est maintenue pendant tout le traitement, mais on peut aussi envisager de simplement élever la température de la dispersion de départ à 80°C, puis de continuer le traitement sans source de chaleur.

La première étape du traitement consiste à déposer par précipitation une couche de phosphate d'alumine à la surface du pigment.

On entend, ici et pour toute la description, par phosphate d'alumine un composé d'oxyhydroxyde d'aluminium et de phosphore. Plus particulièrement, cet oxyhydroxyde d'aluminium et de phosphore précipité à la surface du pigment de dioxyde de titane selon l'invention peut se définir comme pouvant être obtenu par précipitation dans les conditions opérationnelles décrites ci-dessous.

C'est cet oxyhydroxyde d'aluminium et de phosphore ainsi obtenu qui contribue notamment aux diverses propriétés dont celles de rétention et de tenue à la lumière du pigment selon l'invention.

Habituellement, on précipite cette première couche de phosphate d'alumine à partir d'un sel d'aluminium et d'un composé du phosphore, notamment sous forme d'une solution.

En ce qui concerne la quantité de sel d'aluminium introduite au cours de la première étape, cette dernière est de préférence comprise entre 0,5 et 3% exprimés en poids d'$Al_2O_3$ par rapport au poids du dioxyde de titane.

De manière encore plus préférentielle, on peut en introduire 0,5% à 2%.

Les sels d'aluminium utilisés sont en général des sels hydroxylés basiques, on peut en particulier choisir l'aluminate de soude, le chlorure basique d'aluminium, l'hydroxyde d'aluminium diacétate. On peut aussi utiliser le sulfate d'alumine.

Pour ce qui est du composé du phosphore utilisé dans la première étape de précipitation, il peut être introduit plus particulièrement dans une quantité d'au moins 0,5 % en poids de $P_2O_5$ par rapport au poids du dioxyde de titane et plus particulièrement comprise entre 0,5 et 5%.

De préférence, on peut en introduire entre 1% et 4%.

Les quantités de sel d'aluminium et de composé du phosphore introduites sont modulées de manière à précipiter une couche de phosphate d'alumine présentant un rapport molaire P/AI d'au plus 2, de préférence d'au moins 0,5, voire d'au moins 1, encore plus préférentiellement compris entre 1,5 et 2.

Si un dispersant à base de phosphate a été utilisé pour stabiliser la dispersion de dioxyde de titane de départ, on retranche la quantité de phosphate apportée par le dispersant à la quantité de phosphate introduite lors de la première étape de précipitation.

On peut en particulier choisir le composé du phosphore parmi l'acide phosphorique, les phosphates tels que le tétrapyrophosphate de potassium ou de sodium, l'hexamétaphosphate de potassium ou de sodium, le tripolyphosphate de potassium ou de sodium.

De manière avantageuse, on introduit successivement dans la suspension aqueuse de pigments de dioxyde de titane le composé du phosphore puis le sel d'aluminium.

En général, la première étape de précipitation a lieu à un pH convenable pour précipiter le phosphate d'alumine tel que décrit précédemment. Ce pH peut être compris entre 4 et 8. Mais habituellement, on effectue la première étape de précipitation à pH acide, de préférence à un pH d'au plus 6. Plus préférentiellement, ce pH peut être compris entre 4 et 6.

Le pH est contrôlé par l'ajout d'acide phosphorique et /ou d'un autre acide tel que : l'acide sulfurique, l'acide chlorhydrique. Il peut aussi être contrôlé par l'introduction simultanée et/ou alternative du composé à base de phosphore et du sel d'aluminium qui vont former le précipité de phosphate d'alumine. C'est le cas par exemple lorsqu'on utilise lors de cette première précipitation de l'acide phosphorique et de l'aluminate de soude.

La deuxième étape consiste à déposer une couche d'alumine par dessus la couche de phosphate d'alumine.

On entend, ici et pour toute la description, par couche d'alumine un précipité d'un oxyde et/ou d'un oxyhydroxyde d'aluminium.

Habituellement, on précipite cette deuxième couche à partir d'un sel d'aluminium tel que ceux définis pour la précipitation de la première couche.

La quantité de sel d'aluminium introduite est modulée de manière à obtenir un pigment de dioxyde de titane présentant un potentiel zéta positif à des pH élevés.

Au cours de cette deuxième précipitation, la quantité de sel d'aluminium introduite peut ainsi être comprise entre 1 et 5% exprimé en poids d'$Al_2O_3$ par rapport au poids du dioxyde de titane. Préférentiellement, la quantité peut être comprise ente 2% et 4%.

Habituellement, cette précipitation peut se faire au pH nécessaire à la précipitation de la couche d'alumine. Ce pH peut être compris entre 3 et 10. De préférence, ce pH est compris entre 3 et 7. La régulation peut être effectuée par l'ajout d'acide sulfurique.

Après chaque étape de précipitation, on peut effectuer des étapes de mûrissement. Ces dernières consistent à agiter le mélange réactionnel suite à l'introduction de tous les composés du phosphore et des sels d'aluminium en ce qui concerne la première étape, et à l'introduction de tout le sel d'aluminium en ce qui concerne la deuxième étape.

De préférence, le temps de mûrissement est de l'ordre de 5 à 30 mn à chaque étape.

Suite à ces deux étapes de précipitation, les pigments traités sont séparés de la phase liquide de la suspension par tout moyen connu.

Puis le pigment est généralement lavé à l'eau, séché et micronisé.

Les pigments obtenus par un tel procédé présentent habituellement un potentiel zéta positif à pH = 5,5.

L'invention concerne ensuite un pigment de dioxyde de titane comprenant un noyau de dioxyde de titane recouvert successivement d'une couche de phosphate d'alumine, puis d'une couche d'alumine, puis d'une couche d'oxyde de magnésium.

On entend, ici et pour toute la description, par oxyde de magnésium un oxyde et/ou hydroxyde de magnésium. Habituellement, il s'agit du dihydroxyde de magnésium.

Comme caractère additif, un tel pigment présente un potentiel zéta positif à un pH compris entre 7 et 8.

Habituellement, un tel pigment comprend 90 à 94,3% en poids de dioxyde de titane, 2,5 à 4,5% de phosphate d'alumine, 3 à 4% d'alumine et 0,2 à 1,5% d'oxyde de magnésium. Les notions de phosphate d'alumine et d'oxyde de magnésium sont les mêmes que celles définies plus haut.

Pour l'ensemble de la description, les différentes couches qui recouvrent le dioxyde de titane présentent une épaisseur comprise en général entre 50 et 100 Å. Ces couches peuvent être discontinues, entourant de manière plus ou moins régulière le dioxyde de titane.

Il est rappelé que lorsqu'une particule en suspension se déplace au sein d'un liquide (sous l'action de l'agitation thermique, d'un champ de gravité par exemple), elle est entourée d'une couche limite où la vitesse du fluide passe continument de V, vitesse de la particule, à 0 quand on s'éloigne de la surface. La décroissance de la vitesse s'arrête assez nettement pour que l'on puisse définir une surface extérieure à la particule, séparant les molécules qui sont entrainées par celle-ci de celles qui ne le sont pas. Cette surface s'appelle surface de cisaillement.

En pratique cette surface se situe sur la couche de Stern ou légèrement à l'extérieur de celle-ci. Le potentiel électrostatique moyen sur cette surface est le potentiel zêta. Parmi toutes les valeurs du potentiel entre la surface et l'infini, c'est la seule mesurable.

Le principe de la mesure du potentiel zêta consiste notamment en la mesure de la vitesse de la particule en suspension en déplacement dans un champ électrique E. Soit V cette vitesse, le rapport V/E = U (en $m^2$/Volt.s) représente la mobilité électrophorétique de la particule. On a alors :

$$\text{Potentiel zêta} = \frac{3}{2}\frac{\eta U}{\varepsilon}$$

avec $\eta$ : viscosité du liquide (en pascal.s)

$\varepsilon$ : constante diélectrique du liquide (en unité S.I.)

f(Ka) : facteur variant de 2/3 à 1 selon le rayon de la particule (a) par rapport à l'épaisseur de la double couche (1/K).

Le point isoélectrique (PIE) correspond au cas où le système étudié présente un potentiel zêta moyen nul. Expérimentalement cela se traduit par une vitesse de déplacement nulle dans un champ électrique non nul. Le point isoélectrique est alors défini par le pH d'une suspension de dioxyde de titane selon l'invention (dans le liquide) pour lequel la mobilité électrophorétique d'une particule de ce dioxyde de titane dans le liquide est nulle ("Zeta Potential in Colloid Science", Robert J.HUNTER, Academic Press, 1981)

Le potentiel zêta peut être mesuré (comme dans les exemples ci-après) à l'aide d'un appareil vendu sous la désignation commerciale LAZER ZEE METER (Modèle 501-PEN KEM).

---

La mesure du potentiel zéta d'une particule minérale ou organique permet d'accéder à l'évaluation de sa charge de surface dans le milieu de mesure. Or la fixation des particules de dioxyde de titane sur les fibres de cellulose est grandement favorisée par l'attraction électrostatique entre la charge anionique des fibres de cellulose et la charge cationique desdites particules jusqu'à des pH pouvant atteindre 7 à 8.

Ainsi la rétention physico-chimique desdites particules et donc l'opacité du papier pigmenté et d'un papier lamifié à base dudit papier pigmenté imprégné de résine sont très sensiblement améliorées, notamment lorsque les eaux employées lors de la préparation du papier ont une concentration élevée en ions. De plus, le phénomène d'autofloculation desdites particules en présence de ces mêmes eaux est très sensiblement atténué.

Ce pigment de dioxyde de titane comprenant un noyau de dioxyde de titane recouvert successivement d'une couche de phosphate d'alumine, puis d'une couche d'alumine, puis d'une couche d'oxyde de magnésium peut être obtenu par le procédé selon l'invention qui met en oeuvre les étapes suivantes:

- on forme une suspension aqueuse de pigments de dioxyde de titane,
- on précipite dans une première étape une couche de phosphate d'alumine à la surface du pigment,
- on précipite dans une deuxième étape une couche d'alumine sur le pigment,
- on précipite une couche d'oxyde de magnésium sur le pigment,
- on récupère le pigment à partir de la suspension.

Les deux premières étapes de précipitation sont effectuées de la même manière que dans le procédé décrit précédemment et avec les mêmes variantes.

La précipitation de la couche d'oxyde de magnésium peut s'effectuer à partir d'un sel de magnésium notamment un chlorure ou un sulfate.

La quantité de sel de magnésium introduite est généralement supérieure à 0,2% en poids de MgO par rapport au poids du dioxyde de titane, de préférence inférieure à 2% et plus préférentiellement comprise entre 0,2% et 1,5%.

Cette précipitation peut être effectuée au pH convenable pour la précipitation de la couche d'oxyde de magnésium. Habituellement, ce pH est compris entre 5 et 9, et de préférence entre 7 et 9. Il peut être régulé par des solutions de NaOH, KOH ou $Na_2CO_3$.

Cette dernière précipitation peut être suivie d'une étape de mûrissement.

Suite à ces trois étapes de précipitation, les pigments traités sont séparés de la phase liquide de la suspension par tout moyen connu.

Puis le pigment est généralement lavé à l'eau, séché et micronisé.

Enfin, l'invention concerne l'utilisation dans la préparation de papier ou de lamifiés de papier des pigments décrits précédemment ou obtenus par les procédés selon l'invention.

Tout procédé de préparation de papier (ou de formulation papier) connu de l'homme du métier peut être employé. Le papier est habituellement préparé à partir d'un mélange d'eau, de fibres de cellulose et d'un pigment selon l'invention ou obtenu selon un procédé de l'invention, en présence éventuellement d'un agent d'amélioration de la résistance à l'état humide. Ledit agent est par exemple constitué d'un sel d'ammonium quaternaire de polymères à base d'épichlorhydrine (par exemple de polymères épichlorhydrine/diméthylamine).

L'invention se rapporte également à l'utilisation du pigment tel que décrit précédemment ou obtenu selon les procédés décrits précédemment dans la préparation de papier de lamifiés (ou stratifiés) à base de papier contenant ledit pigment et au moins une résine (notamment une résine mélamine ou mélamine-formol). Tout procédé de préparation de lamifiés de papier connu de l'homme du métier peut être employé (en mettant en oeuvre un papier pigmenté à l'aide du pigment selon l'invention) pour préparer des lamifiés. L'invention n'est pas limitée à un procédé particulier de préparation. Ainsi, par exemple, le papier pigmenté peut être imprégné d'une solution hydroalcoolique de résine, après quoi, plusieurs feuilles de papier pigmenté imprégné de résine sont stratifiées par des techniques de pressage à chaud. Le papier pigmenté peut contenir un agent d'amélioration de la résistance à l'état humide.

Les exemples suivants illustrent l'invention sans toutefois en limiter la portée.

## EXEMPLES

## Tests de mesures de charge de surface "potentiel zéta" (exemples 1 et 2)

Principe :

- Préparation d'une suspension de dioxyde de titane à 30 g/l
- Mise à pH = 5,5 avant centrifugation

- Mesure à l'aide d'un zétamètre (type LAZER ZEE METER 501) du filtrat additionné d'une goutte de suspension à 30 g/l.

Préparation de l'échantillon :

- On prépare un slurry à 40% (60 g d'eau filtrée, 40 g de dioxyde de titane).
- On prépare la suspension à 30 g/l à partir du slurry dans une fiole à 250 ml et on complète avec de l'eau filtrée.
- On ajuste le pH de la suspension à la valeur de 5,5 avec HCl 0,5 N sous agitation magnétique. On attend 10 mn.
  Si le pH est éloigné de 5,5 de moins de 0,1, on centrifuge la suspension.
  Si le pH est éloigné de 5,5 de plus de 0,1, on le réajuste à 5,5 puis on attend 10 mn.
- On effectue la centrifugation dans des godets en polycarbonate à 8000 trs/mn pendant 5 mn à 20°C.
- On récupère le surnageant (100 ml), et on y ajoute une goutte de suspension à 30 g/l.

Référence

Le dioxyde de titane A, commercialisé par Rhône-Poulenc sous la référence RL 18, est un pigment de dioxyde de titane rutile présentant à un pH de 5,5 un potentiel zêta négatif.

**Test de tenue lumière en lamifiés** (exemples 1 et 2)

But

Mesurer les performances du dioxyde de titane en milieu lamifiés lors de l'exposition dans un appareil de vieillissement accéléré.

Principe

Confection d'une éprouvette de lamifié à base du dioxyde de titane à tester. Exposition de 48 h au Xenotest.
Mesures colorométriques de la dégradation de teinte.
Exploitation des résultats par comparaison à des standards.

Confection de l'éprouvette

- On tire une feuille d'envron 350 g/m$^2$ à partir d'une suspension de 7,5 g de cellulose et de 6,3 g de dioxyde de titane dans 500 ml d'eau, floculée par du sulfate d'alumine.
- Après séchage, on imprègne la feuille par trempage dans une solution à 33% de mélamine-formol (INILAM RP 285) puis on sèche.
- On presse entre deux plaques polies un empilement de : 1 overlay, 2 feuilles imprégnées chargées, 1 feuille imprégnée non chargée.
  Conditions de pressée : plateaux de 40 cm X 40 cm, P = 56 bars, T = 130°C, t = 15 mn.

Exposition Xenotest

Durée : 48 h, hygrométrie : 90%, arrosage : 30 s/15 mn.

Expression des résultats - Référence standard

Mesures calorimétriques et calcul de l'écart de teinte ΔE CIELAB.
Péréquation à partir des valeurs trouvées pour les standard exposés dans la série (ΔE = 1,2 pour l'échantillon de dioxyde de titane A qui correspond à un pigment de dioxyde de titane rutile présentant un potetiel zéta positif à un pH de 5,5).

## Exemple 1 : dépôt d'une couche de phosphate d'alumine et d'une couche d'alumine

On part d'une suspension de dioxyde de titane de concentration de 900 g/l. Elle a été broyée en présence de 0,2% en poids de tripolyphosphate de potassium par rapport au poids du dioxyde de titane, puis diluée à 350 g/l.

Elle est maintenue à une température de l'ordre de 60°C.

Première couche.

On ajoute à la dispersion :

- 2,5% en poids de $P_2O_5$ sous la forme d'une solution d'acide phosphorique,
- 1% en poids d'$Al_2O_3$ sous la forme d'une solution d'aluminate de soude.

Ces additions sont réalisées en 10 mn. Le pH est régulé durant la précipitation et en fin d'addition par ajout d'acide sulfurique entre 4,8 et 5,2.

Suite à cela, le mélange réactionnel est agité au repos pendant 30 mn.

Deuxième couche.

On ajoute au milieu réactionnel précédent :

- 3,5% en poids d'$Al_2O_3$ sous forme d'une solution d'aluminate de soude.

Cette addition est réalisée en 10 mn. Durant celle-ci le pH est maintenu entre 7 et 7,5 par ajout d'acide sulfurique.

La dispersion est ensuite filtrée.

Les pigments de dioxyde de titane obtenus sont lavés par de l'eau à 45°C, séchés à 150°C pendant 15 heures et micronisés.

    Analyse chimique globale en poids : 4,6% $Al_2O_3$
2,5% $P_2O_5$
    Test de tenue lumière en lamifiés :
    $\Delta$ E          1,3
    Mesure de charge de surface :
    Potentiel zéta à pH=5,5    +10
    Potentiel zéta à pH=7    +2

On constate que le pigment de dioxyde de titane obtenu présente simultanément une bonne tenue à la lumière et un potentiel zéta positif à un pH de 7.

## Exemple 2 : dépôt d'une couche de phosphate d'alumine, d'une couche d'alumine et d'une couche d'oxyde de magnésium.

On part d'une suspension de dioxyde de titane de concentration 900 g/l. Elle a été broyée en présence de 0,2% en poids d'amino 2-méthyl 2-propanol 1 par rapport au poids du dioxyde de titane, puis diluée à 350 g/l.

Elle est chauffée à une température de 80°C.

Première couche.

On ajoute à la dispersion :

- 2,5 % en poids de $P_2O_5$ sous la forme d'une solution d'acide phosphorique,
- 1% en poids d'$Al_2O_3$ sous la forme d'une solution d'aluminate de soude.

Le pH est abaissé à 5 par l'ajout de l'acide phosphorique, puis régulé entre 4,8 et 5,2 par l'ajout simultané de l'aluminate de soude ou de l'acide phosphorique. En fin d'addition, le pH est contrôlé par ajout d'acide sulfurique. Les additions sont réalisées en 10 mn.

Suite à cela, le mélange réactionnel est maintenu sous agitation pendant 30 mn.

Deuxième couche.

On ajoute au milieu réactionnel précédent :

-  3,5% en poids d'Al$_2$O$_3$ sous forme d'aluminate de soude.

Le pH remonte à 7 par ajout d'aluminate de soude, puis contrôlé par l'ajout simultané de l'aluminate de soude et d'acide sulfurique pour conserver ce pH de 7. Ces additions sont réalisées en 10 mn.

Suite à cela, le mélange réactionnel est maintenu sous agitation pendant 15 mn.

Troisième couche.

On ajoute au milieu réactionnel précédent :

-  0,5% en poids de MgO sous forme de sulfate de magnésium.

Le pH est régulé entre 7 et 8 par ajout simultané du sulfate de magnésium et d'une solution potassique.

Suite à cela, le mélange réactionnel est maintenu sous agitation pendant 15 mn.

La dispersion est ensuite filtrée.

Les pigments de dioxyde de titane obtenus sont lavés par de l'eau à 45°C, séchés à 150°C pendant 15 heures et micronisés.

Analyse chimique globale en poids : 4,6% Al$_2$O$_3$
2,5% P$_2$O$_5$
0,3%MgO

Test de tenue lumière en lamifiés :
ΔE          1,3

Mesure de charge de surface :
Potentiel zéta à pH=5,5        +15
Potentiel zéta à pH=7        +5

On constate que le pigment de dioxyde de titane obtenu présente simultanément une bonne tenue à la lumière et un potentiel zéta positif à un pH de 7.

**Exemple 3: taux de rétention**

On mesure ici, pour divers dioxydes de titane, le taux de dioxyde de titane retenu (taux de rétention en TiO$_2$) dans une feuille de papier (ou formette) de 80g/m$^2$, préparée, sans ajout d'agent d'amélioration de la résistance à l'état humide, à un pH de 6,5 et 8,5.

1) Dans un bêcher, on mélange sous agitation 100 parts en poids de fibres de cellulose prédispersées à 40 g/l dans de l'eau et 70 parts de particules de dioxyde de titane prédispersées à 40 % en poids dans de l'eau (le volume fibres de cellulose + dioxyde de titane est déterminé de manière à obtenir finalement une formette de 80 g/m$^2$).

Le pH est ensuite ajusté à la valeur de 6,5 par ajout d'acide chlorhydrique.

Puis on effectue une dilution avec 3 litres d'eau ; on prélève 500 cm$^3$ de suspension obtenue qu'on utilise pour fabriquer une feuille de papier à l'aide d'une tireuse de formette de laboratoire (type Rapid-Khöten).

La formette de 80 g/m$^2$ obtenue est séchée.

2) On répète les opérations du paragraphe 1, le pH étant ici ajusté à la valeur de 8,5 par ajout de carbonate de sodium.

Les formettes de 80 g/m$^2$ obtenues aus paragraphes 1 et 2 sont ensuite calcinées à 800°C ; on mesure alors la masse de cendres obtenues : de part la préparation, cette masse de cendres correspond à la masse de dioxyde de titane contenu dans la formette.

Le taux de rétention en TiO$_2$ correspond alors au rapport Masse de cendres/Masse de dioxyde de titane engagée dans la préparation.

Ce taux de rétention est mesuré pour trois dioxydes de titane différents notés A, B et C (les résultats sont classés dans le tableau 1) :

-  le dioxyde de titane A correspond au dioxyde de titane présentant un potentiel zéta négatif à pH = 5,5,
-  le dioxyde de titane B correspond à celui de l'exemple 1,
-  le dioxyde de titane C correspond à celui de l'exemple 2.

## Tableau 1

|  | A | B | C |
|---|---|---|---|
| pH = 6,5 | 5% | 53% | 56% |
| pH = 8,5 | 3% | 22% | 30% |

On constate que les pigments de dioxyde de titane traités selon l'invention présentent un taux de rétention bien plus élevés par rapport au pigment A. De plus, on note que le pigment de l'exemple 2 obtenu par précipitation successive d'une couche de phosphate d'alumine puis d'alumine puis d'oxyde de magnésium présente un taux de rétention particulièrement élevé, surtout à pH = 8,5, ce qui permet son utilisation avec tous types d'eau.

**Revendications**

1. Procédé de traitement de surface d'un pigment de dioxyde de titane caractérisé en ce qu'il comprend les étapes suivantes :

   - on forme une suspension aqueuse de pigments de dioxyde de titane,
   - on précipite dans une première étape une couche de phosphate d'alumine à la surface du pigment,
   - on précipite dans une deuxième étape une couche d'alumine sur le pigment,
   - on récupère le pigment à partir de la suspension.

2. Procédé selon la revendication précédente caractérisé en ce qu'on effectue le traitement à une température supérieure à 60°C.

3. Procédé selon l'une des revendications précédentes caractérisé en ce qu'on précipite la couche de phosphate d'alumine à partir d'un sel d'aluminium et d'un composé du phosphore.

4. Procédé selon l'une des revendications précédentes caractérisé en ce qu'on introduit au cours de la première étape de précipitation une quantité de sel d'aluminium comprise entre 0,5 et 3% exprimée en poids d'$Al_2O_3$ par rapport au poids du dioxyde de titane.

5. Procédé selon l'une des revendications précédentes caractérisé en ce que le sel d'aluminium introduit lors des étapes de précipitation est choisi parmi les sels suivants : le sulfate d'alumine, les sels basiques tels que l'aluminate de soude, le chlorure basique d'aluminium, l'hydroxyde d'aluminium diacétate.

6. Procédé selon l'une des revendications précédentes caractérisé en ce qu'on introduit au cours de la première étape de précipitation une quantité de composé du phosphore d'au moins 0,5% exprimée en poids de $P_2O_5$ par rapport au poids du dioxyde de titane et de préférence comprise entre 0,5 et 5% .

7. Procédé selon l'une des revendications précédentes caractérisé en ce qu'on précipite à la surface du pigment une couche de phosphate d'alumine présentant un rapport molaire P/Al d'au plus 2, de préférence d'au moins 0,5.

8. Procédé selon l'une des revendications précédentes caractérisé en ce que le composé du phosphore introduit lors de la première étape de précipitation est choisi parmi : l'acide phosphorique et les phosphates.

9. Procédé selon l'une des revendications précédentes caractérisé en ce qu'on effectue la première étape de précipitation à pH compris entre 4 et 8.

10. Procédé selon la des revendication 9 caractérisé en ce qu'on effectue la première étape de précipitation à pH acide, de préférence à un pH d'au plus 6.

11. Procédé selon l'une des revendications précédentes caractérisé en ce qu'on introduit, au cours de la seconde étape de précipitation, une quantité de sel d'aluminium comprise entre 1 et 5% exprimée en poids d'$Al_2O_3$ par

rapport au poids du dioxyde de titane.

12. Pigment de dioxyde de titane caractérisé en ce qu'il comprend un noyau de dioxyde de titane recouvert successivement d'une couche de phosphate d'alumine, puis d'une couche d'alumine, puis d'une couche d'oxyde de magnésium.

13. Pigment selon la revendication 12 caractérisé en ce qu'il présente un potentiel zéta positif à un pH compris entre 7 et 8.

14. Pigment selon la revendication 12 ou 13 caractérisé en ce qu'il comprend 90 à 94,3% en poids de dioxyde de titane, 2,5 à 4,5% de phosphate d'alumine, 3 à 4% d'alumine et 0,2 à 1,5% d'oxyde de magnésium.

15. Procédé de traitement de surface d'un pigment de dioxyde de titane caractérisé en ce qu'on met en oeuvre le procédé selon l'une des revendications 1 à 11 et en ce qu'après la deuxième étape de précipitation de la couche d'alumine, on précipite une couche d'oxyde de magnésium sur le pigment.

16. Procédé selon la revendication 15 caractérisé en ce qu'on précipite la couche d'oxyde de magnésium à partir d'un sel de magnésium notamment un chlorure ou un sulfate.

17. Utilisation dans la fabrication du papier ou de lamifiés de papier du pigment selon les revendications 12 à 14 ou obtenu par le procédé selon l'une des revendications 1 à 11 ou par le procédé selon les revendications 15 ou 16.

## Claims

1. Process for the surface treatment of a titanium dioxide pigment, characterised in that it comprises the following stages:

   - an aqueous suspension of titanium dioxide pigments is formed,
   - a layer of alumina phosphate is precipitated at the surface of the pigment in a first stage,
   - a layer of alumina is precipitated onto the pigment in a second stage,
   - the pigment is recovered from the suspension.

2. Process according to the preceding claim, characterised in that the treatment is carried out at a temperature higher than 60°C.

3. Process according to one of the preceding claims, characterised in that the layer of alumina phosphate is precipitated from an aluminium salt and a phosphorus compound.

4. Process according to one of the preceding claims, characterised in that a quantity of aluminium salt of between 0.5 and 3% expressed as the weight of $Al_2O_3$ in relation to the weight of titanium dioxide is introduced during the first stage of precipitation.

5. Process according to one of the preceding claims, characterised in that the aluminium salt introduced during the stages of precipitation is selected from among the following salts: alumina sulphate, basic salts such as sodium aluminate, basic aluminium chloride, aluminium diacetate hydroxide.

6. Process according to one of the preceding claims, characterised in that a quantity of phosphorus compound of at least 0.5%, expressed as the weight of $P_2O_5$ in relation to the weight of titanium dioxide and preferably of between 0.5 and 5% is introduced during the first stage of precipitation.

7. Process according to one of the preceding claims, characterised in that a layer of alumina phosphate having a P/A1 molar ratio of at most 2, preferably of at least 0.5, is precipitated at the surface of the pigment.

8. Process according to one of the preceding claims, characterised in that the phosphorus compound introduced during the first stage of precipitation is selected from among: phosphoric acid and phosphates.

9. Process according to one of the preceding claims, characterised in that the first stage of precipitation is carried out at a pH of between 4 and 8.

**10.** Process according to claim 9, characterised in that the first stage of precipitation is carried out at an acidic pH, preferably at a pH of at most 6.

**11.** Process according to one of the preceding claims, characterised in that a quantity of aluminium salt of between 1 and 5% expressed as the weight of $Al_2O_3$ in relation to the weight of titanium dioxide is introduced during the second stage of precipitation.

**12.** Titanium dioxide pigment, characterised in that it comprises a titanium dioxide core which is covered successively by a layer of alumina phosphate, then a layer of alumina, then a layer of magnesium oxide.

**13.** Pigment according to claim 12, characterised in that it has a zeta positive potential at a pH of between 7 and 8.

**14.** Pigment according to claim 12 or 13, characterised in that it comprises 90 to 94.3% by weight of titanium dioxide, 2.5 to 4-5% of alumina phosphate, 3 to 4% of alumina and 0.2 to 1.5% of magnesium oxide.

**15.** Process for the surface treatment of a titanium dioxide pigment, characterised in that the process according to one of claims 1 to 11 is employed and in that a layer of magnesium oxide is precipitated onto the pigment after the second stage of precipitation of the layer of alumina.

**16.** Process according to claim 15, characterised in that the layer of magnesium oxide is precipitated from a magnesium salt, in particular a chloride or a sulphate.

**17.** Use in the production of paper or paper laminates of the pigment according to claims 12 to 14 or obtained by the process according to one of claims 1 to 11 or by the process according to claims 15 or 16.

**Patentansprüche**

**1.** Verfahren zur Oberflächenbehandlung eines Titandioxidpigments, dadurch gekennzeichnet, daß es die folgenden Schritte umfaßt:

- man bildet eine wäßrige Suspension aus Titandioxidpigmenten,
- man fällt in einem ersten Schritt eine Aluminiumoxidphosphatschicht auf der Pigmentoberfläche aus,
- man fällt in einem zweiten Schritt eine Aluminiumoxidschicht auf dem Pigment aus,
- man trennt das Pigment aus der Suspension ab.

**2.** Verfahren nach dem vorangehenden Anspruch, dadurch gekennzeichnet, daß man die Behandlung bei einer Temperatur größer 60 °C durchführt.

**3.** Verfahren nach einem der vorangehenden Ansprüche, dadurch gekennzeichnet, daß man die Aluminiumoxidphosphatschicht ausgehend von einem Aluminiumsalz und einer Phosphorverbindung ausfällt.

**4.** Verfahren nach einem der vorangehenden Ansprüche, dadurch gekennzeichnet, daß man während des erstens Ausfällungsschritts eine Menge an Aluminiumsalz zwischen 0,5 und 3 %, berechnet als Gewicht $Al_2O_3$ bezogen auf das Gewicht des Titandioxids, zugibt.

**5.** Verfahren nach einem der vorangehenden Ansprüche, dadurch gekennzeichnet, daß das während der Ausfällungsschritte zugegebene Aluminiumsalz aus den folgenden Salzen gewählt ist: Aluminiumoxidsulfat, basischen Salzen wie Natriumaluminat, basischem Aluminiumchlorid, Aluminiumhydroxiddiacetat.

**6.** Verfahren nach einem der vorangehenden Ansprüche, dadurch gekennzeichnet, daß man während des ersten Ausfällungsschritts eine Menge der Phosphorverbindung von mindestens 0,5 %, berechnet als Gewicht $P_2O_5$ bezogen auf das Gewicht des Titandioxids, vorzugsweise zwischen 0,5 und 5 %, zugibt.

**7.** Verfahren nach einem der vorangehenden Ansprüche, dadurch gekennzeichnet, daß man auf der Pigmentoberfläche eine Aluminiumoxidphosphatschicht mit einem P/Al-Molverhältnis von höchstens 2, vorzugsweise von mindestens 0,5, ausfällt.

8. Verfahren nach einem der vorangehenden Ansprüche, dadurch gekennzeichnet, daß die während des ersten Ausfällungsschritts zugegebene Phosphorverbindung ausgewählt ist aus Phosphorsäure und den Phosphaten.

9. Verfahren nach einem der vorangehenden Ansprüche, dadurch gekennzeichnet, daß der erste Ausfällungsschritt bei einem pH-Wert zwischen 4 und 8 durchgeführt wird.

10. Verfahren nach Anspruch 9, dadurch gekennzeichnet, daß der erste Ausfällungsschritt bei einem sauren pH-Wert, vorzugsweise bei einem pH-Wert von höchstens 6, durchgeführt wird.

11. Verfahren nach einem der vorangehenden Ansprüche, dadurch gekennzeichnet, daß man während des zweiten Ausfällungsschritts eine Menge an Aluminiumsalz zwischen 1 und 5 %, berechnet als Gewicht $Al_2O_5$ bezogen auf das Gewicht des Titandioxids, zugibt.

12. Titandioxidpigment, dadurch gekennzeichnet, daß es einen Titandioxidkern enthält, der nacheinander mit einer Aluminiumoxidphosphatschicht, dann mit einer Aluminiumoxidschicht und schließlich mit einer Magnesiumoxidschicht überzogen ist.

13. Pigment nach Anspruch 12, dadurch gekennzeichnet, daß es ein positives Zeta-Potential bei einem pH-Wert zwischen 7 und 8 enthält.

14. Pigment nach Anspruch 12 oder 13, dadurch gekennzeichnet, daß es 90 bis 94,3 Gew.-% Titandioxid, 2,5 bis 4,5 Gew.-% Aluminiumoxidphosphat, 3 bis 4 Gew.-% Aluminiumoxid und 0,2 bis 1,5 Gew.-% Magnesiumoxid enthält.

15. Verfahren zur Oberflächenbehandlung eines Titandioxidpigments, dadurch gekennzeichnet, daß man das Verfahren nach einem der Ansprüche 1 bis 11 anwendet und daß man nach dem zweiten Schritt der Ausfällung der Aluminiumoxidschicht eine Magnesiumoxidschicht auf dem Pigment ausfällt.

16. Verfahren nach Anspruch 15, dadurch gekennzeichnet, daß man die Magnesiumoxidschicht ausgehend von einem Magnesiumsalz, insbesondere einem Chlorid oder einem Sulfat, ausfällt.

17. Verwendung des Pigments nach den Ansprüchen 12 bis 14 oder des nach dem Verfahren gemäß einem der Ansprüche 1 bis 11 erhaltenen Pigments oder des nach dem Verfahren gemäß den Ansprüchen 15 oder 16 erhaltenen Pigments zur Herstellung von Papier oder Schichtpapier.